# EUROPÄISCHE PATENTSCHRIFT

(11) **EP 2 936 932 B1**
(45) Veröffentlichungstag und Bekanntmachung des Hinweises auf die Patenterteilung: **22.07.2020**
(21) Anmeldenummer: 13830144.5
(22) Anmeldetag: 19.12.2013
(51) Int. Cl.: H05B 33/08, H05B 47/10, H05B 45/00, H05B 47/19

(54) **FUNKÜBERTRAGUNG ZWISCHEN MODULEN IN EINEM POTENTIALGETRENNTEN LED-KONVERTER**
RADIO TRANSMISSION BETWEEN MODULES IN A POTENTIAL-SEPARATED LED CONVERTER
TRANSMISSION RADIO ENTRE DES MODULES D'UN CONVERTISSEUR DEL À ISOLATION GALVANIQUE

(30) Priorität: 21.12.2012 DE 102012224164
(43) Veröffentlichungstag der Anmeldung: 28.10.2015
(73) Patentinhaber: Tridonic GmbH & Co. KG, 6851 Dornbirn (AT)
(72) Erfinder: VONACH, Christoph, 6850 Dornbirn (AT)
(74) Vertreter: Rupp, Christian
(86) Internationale Anmeldenummer: PCT/AT2013/000206
(87) Internationale Veröffentlichungsnummer: WO 2014/094012

(56) Entgegenhaltungen:
- DE-A1-102007 049 052
- DE-A1-102010 031 230
- DE-U1-202007 012 248
- US-A1- 2007 291 488
- US-A1- 2012 007 519

## Beschreibung

Die vorliegende Erfindung betrifft ein Betriebsgerät für Leuchtmittel, insbesondere für eine LED-Strecke, das eine galvanische Trennung ("SELV-Barriere") zwischen einer primärseitigen Schaltung und einer sekundärseitigen Schaltung des Betriebsgeräts aufweist. Die Erfindung bezieht sich weiterhin auf ein Kommunikationsverfahren für Betriebsgeräte für Leuchtmittel, insbesondere LED-Konverter.

Aus dem Stand der Technik sind Betriebsgeräte für Leuchtmittel, insbesondere LED-Konverter, bekannt, die einen IC auf einer Primärseite und wenigstens einen IC auf einer Sekundärseite aufweisen, die voneinander durch eine SELV-Barriere galvanisch getrennt sind. Auf der Sekundärseite erfolgt die elektrische Versorgung der Leuchtmittel, während die Primärseite ausgehend von einer Spannungsversorgung, insbesondere einer Netzspannung versorgbar ist

Die Druckschrift US 2007/0291488 A1 offenbart ein Beleuchtungssystem, welches eine Basis und ein tragbares Lichtgerät umfasst, welches mit der Basis koppelbar ist. Sowohl Basis als auch Lichtgerät umfassen elektrische Schaltungen und sind über Lade- bzw. Aufnahmewindungen magnetisch koppelbar. Ferner umfassen Basis und Lichgerät jeweils eine Sender bzw. Empfänger zur Kommunikation.

Oft ist es gewünscht, dass die primärseitigen und sekundärseitigen Schaltungen miteinander kommunizieren können. Aus dem Stand der Technik ist es hierfür bereits bekannt, dass eine solche Kommunikation über die SELV-Barriere mittels eines Optokopplers erfolgt. Des Weiteren ist es bekannt, mittels eines Transformators über eine galvanische Trennung zu kommunizieren.

Die aus dem Stand der Technik bekannte Kommunikation über die SELV-Barriere mit einem Optokoppler oder Transformator stellt aber hohe Anforderungen an die Komponenten, welche die SELV-Barriere überbrücken, was wiederum zu hohen Kosten in der Herstellung der Betriebsgeräte führt.

Die vorliegende Erfindung hat die Aufgabe den bekannten Stand der Technik zu verbessern. Insbesondere ist die Aufgabe der vorliegenden Erfindung, eine Kommunikation hin zu der Sekundärseite einer galvanischen Trennung in einem Betriebsgerät für Leuchtmittel zu ermöglichen, wobei kostspielige Komponenten wie Optokoppler vermieden werden sollen. Optional wird auch eine bidirektionale Kommunikation zwischen der Primärseite und der Sekundärseite einer galvanischen Trennung in einem Betriebsgerät für Leuchtmittel ermöglicht.

Die Aufgabe der Erfindung wird durch ein Betriebsgerät für Leuchtmittel gemäß der Merkmale der unabhängigen Ansprüche gelöst. Die abhängigen Ansprüche bilden den Kerngedanken der Erfindung vorteilhaft weiter.

Speziell betrifft die vorliegende Erfindung ein Betriebsgerät für Leuchtmittel, insbesondere Konverter für eine LED-Strecke, das umfasst, eine primärseitige Schaltung und eine sekundärseitige Schaltung, die durch eine galvanische Trennung voneinander getrennt sind, wobei die Leuchtmittel sekundärseitig bzgl. der galvanischen Trennung versorgbar sind und die Primärseite zum Anschluss an eine Spannungsversorgung, insbesondere eine Netzspannung eingerichtet ist, wobei die primärseitige Schaltung und die sekundärseitige Schaltung jeweils eine Funkschnittstelle aufweisen zur Einrichtung eines unidirektionalen oder bidirektionalen Funkkanals, der die primärseitige und die sekundärseitige Schaltung miteinander verbindet, wobei der Funkkanal vorzugsweise innerhalb eines vorzugsweise metallischen Gehäuses des Betriebsgeräts liegt.

Der Funkkanal ermöglicht es, unidirektional oder bidirektional Daten bzw. Informationen zwischen der Primärseite und der Sekundärseite des Betriebsgeräts zu übermitteln. Das heißt, die primärseitige Schaltung kann mit der sekundärseitigen Schaltung kommunizieren und Daten austauschen. Die primärseitige und/oder die sekundärseitige Schaltung ist vorzugsweise eine intelligente Schaltung wie ein ASIC ein Mikrocontroller (*µ*C) oder integrierter Schaltkreis (IC). Durch den Funkkanal wird ein Optokoppler oder Transformator zum Kommunizieren über die galvanische Trennung überflüssig. Da Komponenten, die zur Umsetzung einer Funkverbindung benötigt werden, kleiner als Optokoppler oder Transformatoren sind, kann das Betriebsgerät auch platzsparender gebaut werden.

Vorzugsweise ist der Funkkanal zur bidirektionalen Kommunikation zwischen der primärseitigen Schaltung und der sekundärseitigen Schaltung ausgelegt.

Vorzugsweise wird der Funkkanal von einer ersten Antenne gebildet, die mit der primärseitigen Schaltung verbunden ist, und einer zweiten Antenne gebildet, die mit der sekundärseitigen intelligenten Schaltung verbunden ist. Antennen zur Funkkommunikation sind klein und billig und helfen deshalb die Kosten und die Abmessungen des Betriebsgeräts zu reduzieren.

Vorzugsweise wird der Funkkanal von einer ersten Antenne, die auf einer Leiterplatte der primärseitigen Schaltung ausgebildet ist, und einer zweiten Antenne gebildet, die auf einer Leiterplatte der sekundärseitigen Schaltung ausgebildet ist.

Durch das Ausbilden der notwendigen Antennen auf der Leiterplatte der Schaltungen bzw. auf Platinen (PCBs) der Schaltungen wird eine besonders kostengünstige und platzsparende Lösung erreicht.

Vorzugsweise sind in dem Gehäuse, in welchem das Betriebsgerät untergebracht ist, sowohl der Funkkanal als auch die beiden Schaltungen untergebracht.

Vorzugsweise ist das Gehäuse, in welchem das Betriebsgerät untergebracht ist, aus Metall.

Vorteil des Gehäuses der vorliegenden Erfindung ist, dass die Funkkommunikation über den Funkkanal eine rein interne Kommunikation des Betriebsgeräts ist. Da das Gehäuse vorzugsweise aus Metall gefertigt ist, können also keine Störungen nach außen verursacht werden.

Vorzugsweise liegt die Funkleistung des Funkkanals im Bereich von 1 bis 100 mW, vorzugsweise im Bereich von 1 bis 10 mW.

Das Betriebsgerät der vorliegenden Erfindung kommt mit einer sehr niedrigen Funkleistung aus, und kann damit klein konstruiert werden, da keine starken Antennen benötigt werden, zudem kann der Energieverbrauch des Betriebsgeräts gesenkt werden.

Vorzugsweise überbrückt der Funkkanal eine Strecke von etwa 0,5 bis 5 cm, vorzugsweise etwa 1 cm, zwischen der primärseitigen Schaltung und der sekundärseitigen Schaltung.

Die durch die Funkstrecke zu überwindende Distanz von etwa 1 cm ist im Wesentlichen die Strecke, die aus Sicherheitsaspekten für eine galvanische Trennung als räumlicher Abstand vorgeschrieben ist.

Vorzugsweise ist die galvanische Trennung durch einen Transformator realisiert.

Vorzugsweise ist das Betriebsgerät über den Funkkanal ansteuerbar.

Der Funkkanal dient also sowohl als interne als auch externe Kommunikationsverbindung. Separate Steuermittel müssen dem Betriebsgerät nicht mehr hinzugefügt werden. Das Betriebsgerät kann deshalb kleiner konstruiert werden.

Vorzugsweise ist der Funkkanal für eine bidirektionale externe Kommunikation ausgelegt.

Über den Funkkanal können also auch Informationen und Daten nach extern kommuniziert werden, beispielsweise Betriebsparameter, wodurch eine Wartung und Konfiguration über eine drahtlose Verbindung für Betriebsgeräte der vorliegenden Erfindung vereinfacht wird.

Vorzugsweise ist zumindest eine Antenne für eine bidirektionale externe Kommunikation ausgelegt.

Vorzugsweise ist zumindest eine Antenne als eine DALI-Schnittstelle ausgelegt.

Vorzugsweise ist der Funkkanal als eine DALI-Schnittstelle ausgelegt.

Über einen drahtlosen DALI-Bus können somit dem Betriebsgerät verschiedenste Befehle oder auch Fehler übermittelt werden.

Vorzugsweise ist die primärseitige Schaltung und/oder die sekundärseitige Schaltung ein ASIC.

Ein ASIC ist ein Beispiel für eine intelligente Schaltung, die allerdings auch ein Mikrokontroller oder integrierter Schaltkreis sein kann.

Vorzugsweise steuert die primärseitige Schaltung und/oder die sekundärseitige Schaltung ein getaktetes Bauteil und/oder ein Bauteil mit einem leistungsstellenden Glied an.

Vorzugsweise ist das Betriebsgerät ein LED-Konverter.

Insbesondere ein LED-Konverter weist meisten eine SELV-Barriere aus, um eine Isolierung zwischen Ausgang und dem Eingang zu realisieren.

Die vorliegende Erfindung betrifft auch eine LED-Leuchte, aufweisend eine LED-Strecke, die ausgehend von der Sekundärseite eines Betriebsgeräts gemäß der vorhergehenden Beschreibung versorgt ist.

Die vorliegende Erfindung betrifft auch ein Verfahren zum Betrieb von Leuchtmitteln, insbesondere einer LED-Strecke, wobei das Verfahren aufweist: Bereitstellung einer elektrischen Versorgung für die Leuchtmittel mittels eine primärseitige Schaltung und einer sekundärseitige Schaltung, die durch eine galvanische Trennung voneinander getrennt sind, wobei die Leuchtmittel sekundärseitig bzgl. der galvanischen Trennung versorgbar sind und die Primärseite zum Anschluss an eine Spannungsversorgung, insbesondere eine Netzspannung eingerichtet ist, wobei die primärseitige Schaltung und die sekundärseitige Schaltung mittels eines unidirektionalen oder bidirektionalen Funkkanal miteinander kommunizieren.

Die vorliegende Erfindung betrifft auch eine intelligente Schaltung, insbesondere ein IC, ASIC und/oder Mikrokontroller oder eine Hybridversion davon, die zur Verwendung in einem LED-Konverter ausgelegt ist und dementsprechend ausgelegte Eingangs- und Ausganganschlüsse aufweist, und die eine Funkschnittstelle zur Kommunikation mit einem weiteren Bauteil des LED-Konverters aufweist.

Die vorliegende Erfindung wird nun hinsichtlich der beigefügten Figuren mehr im Detail beschrieben.
Fig. 1 ist dabei eine schematische Darstellung eines Betriebsgeräts der vorliegenden Erfindung.
Fig. 2 zeigt einen modularen Aufbau eines LED-Konverters gemäß der vorliegenden Erfindung.

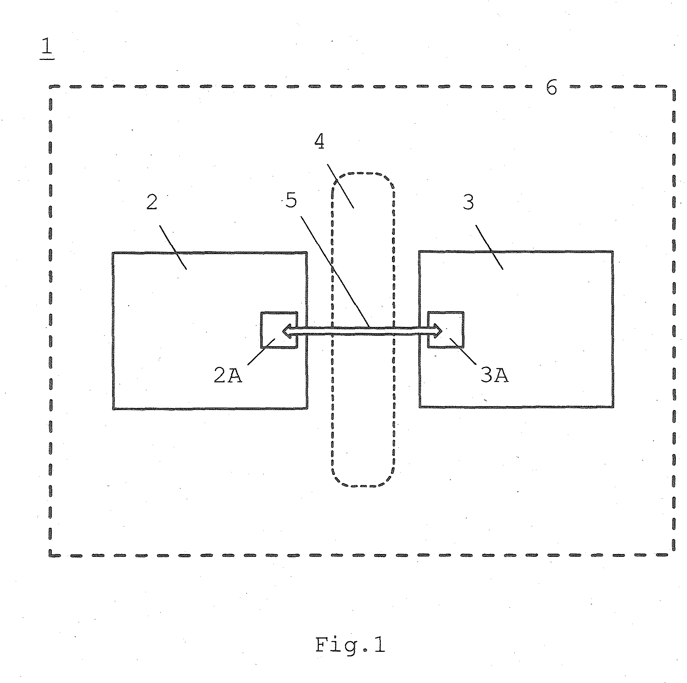

Fig. 1 zeigt ein Betriebsgerät 1, das vollständig in einem Gehäuse 6 untergebracht ist. Das Betriebsgerät 1 kann aber auch aus mehreren Komponenten mit jeweils einzelnen Gehäusen bestehen. Das Gehäuse 6 ist vorzugsweise aus Metall oder einem anderen Material gemacht, dass eine Funkkommunikation gegen Störungen abschirmen kann.

Das Betriebsgerät 1 besteht aus wenigstens einer Schaltung 2 auf einer Primärseite und wenigstens einer Schaltung 3 auf einer Sekundärseite bezüglich einer galvanischen Trennung 4. Die wenigstens zwei Schaltungen 2, 3 sind bevorzugt intelligente Schaltungen, beispielweise eine integrierte Schaltung wie beispielsweise ein ASIC oder ein Mikrokontroller auf. Dabei können die Schaltungen 2 auf der Primärseite gleich oder unterschiedlich zu den Schaltungen 3 auf der Sekundärseite sein. Vorzugsweise steuert die primärseitige bzw. die sekundärseitige intelligente Schaltung 2, 3 jeweils ein oder mehrere getaktete Bauteile bzw. Bauteile mit einem Leistungsstellglied an.

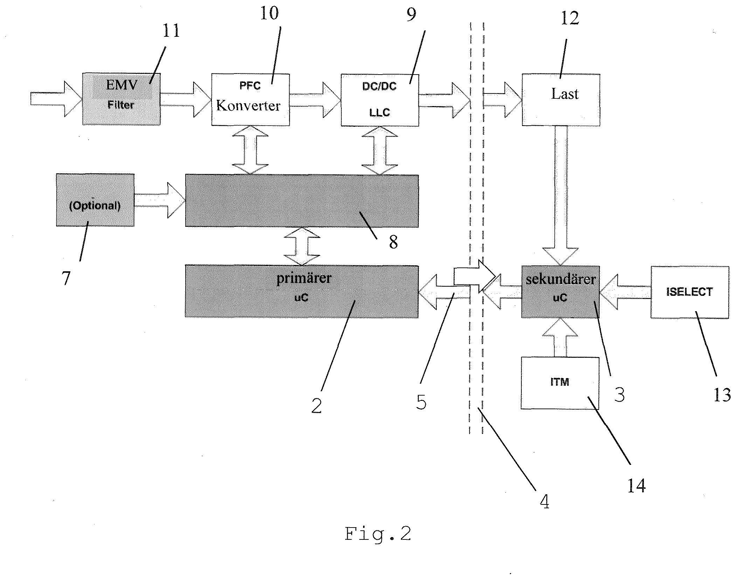

In dem Beispiel der Fig. 2 steuert die Schaltung 2 beispielsweise über einen Steuerbaustein 8 einen PFC-Konverter 10 zur aktiven Leistungsfaktorkorrektur an. Der PFC-Konverter 10 kann beispielsweise ein Hochsetzteller-PFC (Boost PFC, Hochsetzsteller-Leistungsfaktorkorrektur) sein. Der PFC-Konverter 10 kann von der Eingangsseite aus über den Anschluss für eine Spannungsversorgung über ein EMI Filter 11 gespeist werden. Das EMI Filter 11 dient der Filterung von hochfrequenten Störungen. Der PFC-Konverter 10 kann einen potentialgetrennten Konverter 9 speisen. Der potentialgetrennte Konverter 9 ist hier beispielhaft als DC/DC LLC Konverter (isoliererter resonanter Gleichspannungswandler) dargestellt. Der potentialgetrennte Konverter 9 weist vorzugsweise einen Transformator auf, welcher die galvanische Trennung 4 überbrückt. Als Last 12 kann beispielsweise eine oder mehrere LED angeschlossen sein. Optional kann das Betriebsgerät 1 auch auf der Sekundärseite einen aktiv gesteuerten Wandler aufweisen, der durch die Schaltung 3 angesteuert wird.

Das Betriebsgerät 1 kann auf der Primärseite eine optionale Schnittstellenschaltung 7 aufweisen, über die dem Betriebsgerät 1 beispielsweise Helligkeitsbefehle zugeführt werden können. Die Schnittstellenschaltung 7 kann mit dem Steuerbaustein 8 oder auch direkt mit der Schaltung 2 verbunden sein. Der Steuerbaustein 8 kann zumindest einen Hochvolttreiber zum Ansteuern mindestens eines Schalters des PFC-Konverter 10 und / oder den potentialgetrennten Konverter 9 aufweisen.

Die Schaltung 3 kann beispielsweise dazu dienen, einen Strom durch die Last 12 zu erfassen. Die Schaltung 3 kann auch dazu dienen, eine Information 13 (ISELECT) über die Last auszulesen, beispielsweise einen Nominalstrom, wobei die Information 13 von einem Kodierwiderstand vorgegeben wird. Die Schaltung 3 kann auch dazu dienen, eine Temperatur 14 (ITM) in dem Betriebsgerät 1 und / oder an der Last 12 zu erfassen.

Die galvanische Trennung 4 kann beispielsweise durch einen Transformator überbrückt werden. Im Allgemeinen ist die galvanische Trennung eine SELV-Barriere oder eine Schaltung, die eine Trennung gemäß SELV ermöglicht.

Die galvanische Trennung 4 ist durch einen Funkkanal 5 überbrückt. Der Funkkanal 5 ist durch zwei Funkschnittstellen 2A bzw. 3A eingerichtet. Eine Funkschnittstelle 2A ist dabei vorzugsweise der Schaltung 2 auf der Primärseite zugeordnet, eine andere Funkschnittstelle 3A ist der Schaltung 3 auf der Sekundärseite zugeordnet. Der Funkkanal 5 verbindet die wenigstens eine primärseitige Schaltung 2 und die wenigstens eine sekundärseitige intelligente Schaltung 3 unidirektional oder bidirektional miteinander. Vorzugsweise erlaubt der Funkkanal 5 eine bidirektionale Kommunikation zwischen den primärseitigen und sekundärseitigen Schaltungen 2, 3. Der Funkkanal 5 zwischen den beiden Schaltungen 2, 3 ist vorzugsweise eine interne Kommunikation innerhalb des Gehäuses 6, wodurch Störungen nach außen vermieden werden.

Der Funkkanal 5 kann wie in Fig. 1 gezeigt durch zwei Antennen 2A und 3A realisiert werden. Eine erste Antenne 2A ist dabei wenigstens mit einer primärseitigen Schaltung 2 verbunden und eine zweite Antenne 3A ist dabei wenigstens mit einer sekundärseitigen Schaltung 3 verbunden. Jede Schaltung 2, 3 kann mit einer eigenen Antenne 2A, 3A verbunden sein. Es können aber auch nur eine Antenne 2A auf der Primärseite und eine Antenne 3A auf der Sekundärseite zur Überbrückung der galvanischen Trennung 4 vorgesehen sein.

Jede Antenne 2A, 3A kann ein separates Bauteil sein. Jede Antenne 2A, 3A für die Funkkommunikation über die galvanische Trennung 4 kann aber auch in einem Chipgehäuse der primärseitigen oder sekundärseitigen Schaltung 2 oder 3 angeordnet sein, oder auf einer Leiterplatte oder Platine einer der Schaltungen 2, 3 ausgebildet sein. Eine Antenne 2A, 3A kann dabei im Herstellungsprozess gleichzeitig mit Schaltkreisen der Schaltungen 2, 3 gebildet werden.

Die erste Antenne 2A und die zweite Antenne 3A sind vorzugsweise so angeordnet, dass sie an einer Position der jeweiligen Schaltung 2, 3 angeordnet sind, die möglichst nahe der galvanischen Trennung 4 liegt. Idealerweise ist die für die Funkstrecke von der ersten Antenne 2A zur zweiten Antenne 3A zu überwindende Distanz lediglich die Strecke, die aus Sicherheitsaspekten für die galvanische Trennung 4 als räumlicher Abstand vorgeschrieben ist. Bevorzugterweise liegt die zu überwindende Distanz im Bereich von etwa 0,5 cm bis 5 cm, noch mehr bevorzugt etwa 1 cm. Durch die zu überwindende Distanz und die Abschirmung durch das vorzugsweise metallische Gehäuse 6 kann die Funkleistung für die interne Kommunikation zwischen der primärseitigen Schaltung 2 und der sekundärseitigen Schaltung 3 sehr niedrig eingestellt werden. Die Funkleistung kann dabei bevorzugt im Bereich von 1 mW bis 100 mW noch mehr bevorzugt im Bereich von 1 mW bis 10 mW liegen.

Bevorzugt dient jede Antenne 2A, 3A, bzw. der Funkkanal 5 nicht nur für die interne Kommunikation zwischen den Schaltungen auf der Primärseite und der Sekundärseite, sondern auch als Antenne 2A, 3A oder Funkkanal 5 für eine externe Kommunikation, beispielsweise als eine Art drahtloser DALI-Bus. Damit können dem Betriebsgerät 1 drahtlos Befehle von extern übermittelt werden. Die Befehle können beispielsweise Steuerbefehle für das Betriebsgerät, wie AN/AUS, Heller/Dunkler, und dergleichen sein. Die externe Ansteuerung des Betriebsgeräts 1 kann also über Funk, insbesondere über denselben Funkkanal 5 oder auch über die gleiche Antenne 2A und / oder 3A erfolgen, der auch für die interne Kommunikation zwischen den Schaltungen 2, 3 auf der Primärseite und der Sekundärseite verwendet wird. Zumindest eine Antenne der beiden Antennen 2A und 3A kann für eine bidirektionale externe Kommunikation ausgelegt sein. Zumindest eine Antenne der beiden Antennen 2A und 3A kann für eine Kommunikation als eine DALI-Schnittstelle für einen drahtlosen DALI-Bus ausgelegt sein. Es kann vorgesehen sein, dass eine Funkleistung für die interne Kommunikation und die externe Kommunikation unterschiedlich ist. So kann beispielsweise eine Funkleistung für die externe Kommunikation im Bereich von 0,1 bis 1 Watt vorzugsweise bis 100 mW liegen. Das Betriebsgerät 1 kann eine Steuerschaltung aufweisen, die je nach Kommunikation die Funkleistung regelt. Die Steuerschaltung kann z. B. für unterschiedliche Daten oder Informationen, die kommuniziert werden, unterschiedliche Funkleistungen abgelegt oder gespeichert haben, die sie entsprechend auswählt und einstellt.

Der Funkkanal 5 kann beispielsweise durch Nahfeldkommunikation (Near Field Communication), Bluetooth, WPAN oder WLAN realisiert werden. Funkkommunikation gemäß der vorliegenden Erfindung ist klar von rein induktiver Kopplung zu unterscheiden.

Fig. 2 zeigt ein Beispiel eines Betriebsgeräts 1, das zum Betrieb von Leuchtmitteln wie beispielsweise Leuchtdioden oder einer anderen Last ("Load 12") ausgelegt ist. Die Last 12 wird sekundärseitig über eine Schaltung 3, in diesem Beispiel ein *µ*C angesteuert oder zumindest überwacht. Primärseitig erfolgt ein Anschluss an eine Spannungsversorgung. Diese kann beispielweise über einen Filter (EMI Filter 11), eine Leistungsfaktorkorrekturschaltung (PFC-Konverter 10) und einen potentialgetrennte Konverter 9 sowie gesteuert über eine primärseitige Schaltung 2 erfolgen.. Der primärseitigen Schaltung 2 kann beispielsweise über die Schnittstellenschaltung 7 ein Dimm-Signal zum Dimmen der Leuchtmittel zugeführt werden.

Der Funkkanal 5 überwindet die SELV-Barriere 4 zur Kommunikation der Schaltungen 2 und 3. Über den Funkkanal 5 können beispielsweise von der Schaltung 3 die Information 13 oder die Temperatur 14 an die Schaltung 2 übertragen werden. Über den Funkkanal 5 können beispielsweise von der Schaltung 2 über die Schnittstellenschaltung 7 empfangene Befehle oder Signale wie beispielsweise Helligkeitsbefehle an die Schaltung 3 übertragen werden.

Es ist dabei das Merkmal, dass die Leuchtmittel sekundärseitig bzgl. der galvanischen Trennung versorgbar sind, derart zu verstehen, dass die Leuchtmittel auf der Sekundärseite der galvanischen Trennung angeordnet sind und dort entsprechend versorgt werden.

Die vorliegende Erfindung stellt ein Betriebsgerät 1 bereit, in dem eine galvanische Trennung 4 zwischen einer Primärseite, die wenigstens eine Schaltung 2 aufweist, und einer Sekundärseite, die wenigstens eine Schaltung 3 aufweist, durch einen Funkkanal 5 überbrückt wird. Dadurch kann eine Kommunikation von der Primärseite zur Sekundärseite und umgekehrt über Funk erfolgen. Ein Optokoppler oder Transformator zum Kommunizieren über die galvanische Trennung 4 (bspw. SELV-Barriere) kann weggelassen werden. Dadurch kann das Betriebsgerät kostengünstiger und kompakter gebaut werden.

## Patentansprüche

1. Betriebsgerät (1) für Leuchtmittel, insbesondere Konverter für eine LED-Strecke, das eine primärseitige Schaltung (2) und eine sekundärseitige Schaltung (3) umfasst, die durch eine galvanische Trennung (4) voneinander getrennt sind;
wobei die sekundärseitige Schaltung zur Versorgung der Leuchtmittel eingerichtet ist, und die primärseitige Schaltung zum Anschluss an eine Spannungsversorgung, insbesondere eine Netzspannung eingerichtet ist,
wobei die primärseitige Schaltung (2) und die sekundärseitige Schaltung (3) jeweils eine Funkschnittstelle (21, 22) aufweisen zur Einrichtung eines unidirektionalen oder bidirektionalen Funkkanals (5), der die primärseitige (2) und die sekundärseitige Schaltung (3) miteinander verbindet, **dadurch gekennzeichnet, dass** der Funkkanal (5) innerhalb eines metallischen Gehäuses (6) des Betriebsgeräts (1) liegt.

2. Betriebsgerät (1) gemäß Anspruch 1, wobei der Funkkanal (5) zur bidirektionalen Kommunikation zwischen der primärseitigen Schaltung (2) und der sekundärseitigen Schaltung (3) ausgelegt ist.

3. Betriebsgerät (1) gemäß einem der Ansprüche 1 bis 2, wobei der Funkkanal (5) von einer ersten Antenne (2A), die mit der primärseitigen Schaltung (2) verbunden ist, und einer zweiten Antenne (3A), die mit der sekundärseitigen intelligenten Schaltung (3) verbunden ist, gebildet wird.

4. Betriebsgerät (1) gemäß einem der Ansprüche 1 bis 3, wobei der Funkkanal (5) von einer ersten Antenne (2A), die auf einer Leiterplatte der primärseitigen Schaltung (2) ausgebildet ist, und einer zweiten Antenne (3A), die auf einer Leiterplatte der sekundärseitigen Schaltung (3) ausgebildet ist, gebildet wird.

5. Betriebsgerät (1) gemäß einem der Ansprüche 1 bis 4, wobei in dem Gehäuse (6), das vorzugsweise ein Multichip-Gehäuse ist, sowohl der Funkkanal (5) als auch die beiden Schaltungen (2, 3) untergebracht sind.

6. Betriebsgerät (1) gemäß einem der Ansprüche 1 bis 5, wobei das Gehäuse (6) aus Metall ist.

7. Betriebsgerät (1) gemäß einem der Ansprüche 1 bis 6, wobei die Funkleistung des Funkkanals (5) im Bereich von 1 bis 100 mW, vorzugsweise im Bereich von 1 bis 10 mW liegt.

8. Betriebsgerät (1) gemäß einem der Ansprüche 1 bis 7, wobei der Funkkanal (5) eine Strecke von etwa 0,5 bis 5 cm, vorzugsweise etwa 1 cm, zwischen der primärseitigen Schaltung (2) und der sekundärseitigen Schaltung (3) überbrückt.

9. Betriebsgerät (1) gemäß einem der Ansprüche 1 bis 8, wobei die galvanische Trennung (4) durch einen Transformator realisiert ist.

10. Betriebsgerät (1) gemäß einem der Ansprüche 1 bis 9, wobei das Betriebsgerät (1) über den Funkkanal (5) ansteuerbar ist.

11. Betriebsgerät (1) gemäß einem der Ansprüche 1 bis 10, wobei zumindest eine Antenne (2A, 3A) für eine bidirektionale externe Kommunikation ausgelegt ist.

12. Betriebsgerät (1) gemäß einem der Ansprüche 1 bis 11, wobei zumindest eine Antenne (2A, 3A) als eine DALI-Schnittstelle ausgelegt ist.

13. Betriebsgerät gemäß einem der Ansprüche 1 bis 12, wobei die primärseitige Schaltung (2) und/oder die sekundärseitige Schaltung (3) ein ASIC ist.

14. Betriebsgerät (1) gemäß einem der Ansprüche 1 bis 13, wobei die primärseitige Schaltung (2) und/oder die sekundärseitige Schaltung (3) ein getaktetes Bauteil und/oder ein Bauteil mit einem leistungsstellenden Glied ansteuert.

15. Betriebsgerät (1) gemäß einem der Ansprüche 1 bis 14, das ein LED-Konverter ist.

16. LED-Leuchte, aufweisend eine LED-Strecke, die ausgehend von der Sekundärseite eines Betriebsgeräts (1) nach einem der vorhergehenden Ansprüche versorgt ist.

17. Verfahren zum Betrieb (1) von Leuchtmittel, insbesondere einer LED-Strecke, wobei das Verfahren aufweist:
- Bereitstellung einer elektrischen Versorgung für die Leuchtmittel mittels einer primärseitigen Schaltung (2) und einer sekundärseitigen Schaltung (3) in einem Betriebsgerät, die durch eine galvanische Trennung (4) voneinander getrennt sind;
wobei die Leuchtmittel sekundärseitig bezüglich der galvanischen Trennung versorgt werden, und die primärseitige Schaltung an eine Spannungsversorgung, insbesondere eine Netzspannung angeschlossen wird, Bereitstellung einer Kommunikation zwischen der primärseitigen Schaltung und der sekundärseitigen Schaltung mittels eines unidirektionalen oder bidirektionalen Funkkanals (5) **dadurch gekennzeichnet, dass** der Funkkanal (5) innerhalb eines metallischen Gehäuses (6) bereitgestellt wird.

## Claims

1. Operating device (1) for lighting means, especially converters for an LED series, which
comprises a primary-side circuit (2) and a secondary-side circuit (3) separated from one another by a galvanic separation (4);
wherein the secondary-side circuit is configured to supply power to the lighting means, and the primary-side circuit is configured for connection to a voltage supply, especially a mains voltage,
wherein the primary-side circuit (2) and the secondary-side circuit (3) each have a radio interface (21, 22) for establishing a unidirectional or bidirectional radio channel (5) which connects the primary-side (2) and the secondary-side circuit (3) to one another,
**characterized in that**
the radio channel (5) is located within a metallic housing (6) of the operating device (1).

2. Operating device (1) according to claim 1, wherein the radio channel (5) is designed for bidirectional communication between the primary-side circuit (2) and the secondary-side circuit (3).

3. Operating device (1) according to one of claims 1 through 2, wherein the radio channel (5) is formed by a first antenna (2A) connected to the primary-side circuit (2) and a second antenna (3A) connected to the secondary-side intelligent circuit (3).

4. Operating device (1) according to one of claims 1 through 3, wherein the radio channel (5) is formed by a first antenna (2A) formed on a printed circuit board of the primary-side circuit (2) and by a second antenna (3A) formed on a printed circuit board of the secondary-side circuit (3).

5. Operating device (1) according to one of claims 1 through 4, wherein both the radio channel (5) and the two circuits (2, 3) are accommodated within the housing (6), which is preferably a multichip housing.

6. Operating device (1) according to one of claims 1 through 5, wherein the housing (6) is made of metal.

7. Operating device (1) according to one of claims 1 through 6, wherein the radio power of the radio channel (5) is within a range of from 1 to 100 mW, preferably within a range of from 1 to 10 mW.

8. Operating device (1) according to one of claims 1 trough 7, wherein the radio channel (5) bridges a distance of approximately 0.5 to 5 cm, preferably approximately 1 cm, between the primary-side circuit (2) and the secondary-side circuit (3).

9. Operating device (1) according to one of claims 1 through 8, wherein the galvanic separation (4) is realized by a transformer.

10. Operating device (1) according to one of claims 1 through 9, wherein the operating device (1) can be controlled via the radio channel (5).

11. Operating device (1) according to one of claims 1 through 10, wherein at least one antenna (2A, 3A) is designed for bidirectional external communication.

12. Operating device (1) according to one of claims 1 through 11, wherein at least one antenna (2A, 3A) is designed as a DALI interface.

13. Operating device according to one of claims 1 through 12, wherein the primary-side circuit (2) and/or the secondary-side circuit (3) is an ASIC.

14. Operating device (1) according to one of claims 1 through 13, wherein the primary-side circuit (2) and/or the secondary-side circuit (3) controls a clocked component and/or a component having a power-generating element.

15. Operating device (1) according to one of claims 1 through 14, which is an LED converter.

16. LED light having an LED series which is supplied with power starting from the secondary side of an operating device (1), according to one of the preceding claims.

17. Method for operating (1) lighting means, especially an LED series, wherein the method features:
- provision of an electrical supply for the lighting means by means of a primary-side circuit (2) and a secondary-side circuit (3) in an operating device, which circuits are separated from each other by a galvanic separation (4);
wherein the lighting means are supplied on the secondary side with respect to the galvanic separation, and the primary-side circuit is connected to a voltage supply, especially a mains voltage,
provision of communication between the primary-side circuit and the secondary-side circuit by means of a unidirectional or bidirectional radio channel (5)
**characterized in that**
the radio channel (5) is provided inside a metallic housing (6).

## Revendications

1. Dispositif de fonctionnement (1) pour des moyens d'éclairage, en particulier convertisseur pour une piste à DEL, qui
comprend un circuit côté primaire (2) et un circuit côté secondaire (3), qui sont séparés l'un de l'autre par isolation galvanique (4) ;
le circuit côté secondaire étant configuré pour l'alimentation des moyens d'éclairage et le circuit côté primaire étant configuré pour le raccordement à une alimentation en tension, en particulier une tension de réseau,
le circuit côté primaire (2) et le circuit côté secondaire (3) présentant respectivement une interface radio (21, 22) pour la configuration d'un canal radio (5) unidirectionnel ou bidirectionnel, qui connecte le circuit côté primaire (2) et le circuit côté secondaire (3) l'un à l'autre,
**caractérisé en ce que**
le canal radio (5) se trouve à l'intérieur d'un boîtier métallique (6) du dispositif de fonctionnement (1).

2. Dispositif de fonctionnement (1) selon la revendication 1, dans lequel le canal radio (5) est conçu pour la communication bidirectionnelle entre le circuit côté primaire (2) et le circuit côté secondaire (3).

3. Dispositif de fonctionnement (1) selon l'une quelconque des revendications 1 à 2, dans lequel le canal radio (5) est formé par une première antenne (2A), qui est connectée au circuit côté primaire (2) et par une deuxième antenne (3A), qui est connectée au circuit intelligent côté secondaire (3).

4. Dispositif de fonctionnement (1) selon l'une quelconque des revendications 1 à 3, dans lequel le canal radio (5) est formé par une première antenne (2A), qui est réalisée sur une carte de circuit du circuit côté primaire (2) et par une deuxième antenne (3A), qui est réalisée sur une carte de circuit du circuit côté secondaire (3).

5. Dispositif de fonctionnement (1) selon l'une quelconque des revendications 1 à 4, dans lequel le canal radio (5) ainsi que les deux circuits (2, 3) sont logés dans le boîtier (6), qui est de préférence un boîtier multi-puces.

6. Dispositif de fonctionnement (1) selon l'une quelconque des revendications 1 à 5, dans lequel le boîtier (6) est en métal.

7. Dispositif de fonctionnement (1) selon l'une quelconque des revendications 1 à 6, dans lequel la puissance radio du canal radio (5) se situe dans la plage de 1 à 100 mW, de préférence dans la plage de 1 à 10 mW.

8. Dispositif de fonctionnement (1) selon l'une quelconque des revendications 1 à 7, dans lequel le canal radio (5) couvre une distance d'environ 0,5 à 5 cm, de préférence d'environ 1 cm, entre le circuit côté primaire (2) et le circuit côté secondaire (3).

9. Dispositif de fonctionnement (1) selon l'une quelconque des revendications 1 à 8, dans lequel l'isolation galvanique (4) est réalisée par un transformateur.

10. Dispositif de fonctionnement (1) selon l'une quelconque des revendications 1 à 9, dans lequel le dispositif de fonctionnement (1) peut être commandé à travers le canal radio (5).

11. Dispositif de fonctionnement (1) selon l'une quelconque des revendications 1 à 10, dans lequel au moins une antenne (2A, 3A) est conçue pour une communication externe bidirectionnelle.

12. Dispositif de fonctionnement (1) selon l'une quelconque des revendications 1 à 11, dans lequel au moins une antenne (2A, 3A) est conçue comme une interface DALI.

13. Dispositif de fonctionnement (1) selon l'une quelconque des revendications 1 à 12, dans lequel le circuit côté primaire (2) et/ou le circuit côté secondaire (3) est un ASIC.

14. Dispositif de fonctionnement (1) selon l'une quelconque des revendications 1 à 13, dans lequel le circuit côté primaire (2) et/ou le circuit côté secondaire (3) commande un composant cadencé et/ou un composant comprenant un élément réglant la puissance.

15. Dispositif de fonctionnement (1) selon l'une quelconque des revendications 1 à 14, qui est un convertisseur à DEL.

16. Lampe à DEL, comprenant une piste à DEL, qui est alimentée à partir du côté secondaire d'un dispositif de fonctionnement (1) selon l'une quelconque des revendications précédentes.

17. Procédé de fonctionnement (1) de moyens d'éclairage, en particulier d'une piste à DEL, le procédé comprenant :
- la mise à disposition d'une alimentation électrique pour les moyens d'éclairage au moyen d'un circuit côté primaire (2) et d'un circuit côté secondaire (3) dans un dispositif de fonctionnement, qui sont séparés l'un de l'autre par une isolation galvanique (4) ;
les moyens d'éclairage étant alimentés côté secondaire par rapport à l'isolation galvanique et le circuit côté primaire étant raccordé à une alimentation en tension, en particulier une tenson de réseau,
la mise à disposition d'une communication entre le circuit côté primaire et le circuit côté secondaire au moyen d'un canal radio (5) unidirectionnel ou bidirectionnel
**caractérisé en ce que**
le canal radio (5) est mis à disposition à l'intérieur d'un boîtier métallique (6).
